# EUROPEAN PATENT APPLICATION

(11) **EP 4 761 019 A1**
(43) Date of publication of application: **17.06.2026**
(21) Application number: 24850598.4
(22) Date of filing: 30.04.2024
(51) Int. Cl.: H02B 1/20

(54) **ELECTRICAL DEVICE**

(30) Priority: 09.08.2023 CN 202322160300 U
(71) Applicant: Sungrow Power Supply Co., Ltd., Hefei, Anhui 230088 (CN)
(72) Inventor: MAO, Junjie, Hefei, Anhui 230088 (CN); HUANG, Shuqiang, Hefei, Anhui 230088 (CN)
(74) Representative: Rooney, John-Paul
(86) International application number: PCT/CN2024/090813
(87) International publication number: WO 2025/030943

(57) **Abstract**

The present application discloses an electrical device, comprising a device body, wherein a recess is formed on the surface of a preset side in the device body, and the recess extends to the surface of at least one side adjacent to the preset side in the device body; an element connected to the interior of the device body is installed in the recess. In the electrical device, a recess is formed on the surface of a preset side of a device body, and the recess extends to the surface of at least one side adjacent to the preset side in the device body. By configuring the preset side as the back of the device body, a wiring operation can be implemented by accessing the recess from the surface adjacent to the back, thereby improving the convenience of the wiring operation from the back, eliminating the need for excessive space reserved on the back side of the electrical device, and saving the floor area occupied by the electrical device.

## Description

The present application claims the priority to Chinese Patent Application No. 202322160300.3, titled "ELECTRICAL DEVICE", filed on August 9, 2023 with the China National Intellectual Property Administration, which is incorporated herein by reference in its entirety.

### FIELD

The present application relates to the technical field of external wiring for power equipment and, in particular, to an electrical device.

### BACKGROUND

The surface of an electrical device is typically equipped with components such as indicator lights, operation buttons, and wiring ports for connecting cables. When the electrical device is mounted on site with its back surface being adjacent to a wall or other electrical devices., wiring operations on the back surface of the electrical device may be obstructed by the wall or other electrical devices. Thus, it is necessary to keep the electrical device at a relatively long distance from the obstructing objects, resulting in increase of its footprint.

Therefore, it is desired for those skilled in the art to avoid keeping the electrical device at a relatively long distance from the obstructing objects and to reduce the footprint of the electrical device in the case of wiring operations on the back surface of the electrical device.

### SUMMARY

In view of this, an electrical device is provided in the present application, including a device body. A recessed portion is provided on the surface of a predetermined side of the device body and extends to the surface of at least one side of the device body adjacent to the predetermined side. Provided the surface of the predetermined side is defined as a back surface of the device body, wiring operations can be performed by accessing to the recessed portion from a surface adjacent to the back surface. This improves the convenience of back-side wiring operations, avoids the need to reserve an excessive space on the back side of the electrical device, and saves floor space occupied by the electrical device.

To achieve the foregoing object, the following technical solutions are provided according to the present application.

An electrical device includes a device body. A recessed portion is provided on a surface of a predetermined side of the device body, and extends to a surface of at least one side of the device body adjacent to the predetermined side. Elements are mounted in the recessed portion and connected to interior of the device body.

Optionally, in the electrical device described above, the surface of the predetermined side is a back surface of the device body. The recessed portion extends to a top side surface of the device body.

Optionally, in the electrical device described above, a cover plate is mounted on the top side surface of the device body to cover the recessed portion.

Optionally, in the electrical device described above, the recessed portion further extends to one vertical side surface of the device body adjacent to the back surface, or to two opposite vertical side surfaces of the device body adjacent to the back surface.

Alternatively, the cover plate is openable and closable.

Optionally, in the electrical device described above, a bottom surface of the recessed portion is an inclined plane. The bottom surface has an upper end intersecting the top side surface of the device body and a lower end intersecting the back surface of the device body. The elements are fixed to the bottom surface of the recessed portion.

Optionally, in the electrical device described above, the bottom surface of the recessed portion intersects two opposite vertical side surfaces of the device body, which are adjacent to both the top side surface and the back surface.

Optionally, in the electrical device described above, the bottom surface is at a predetermined angle to the vertical.

Optionally, in the electrical device described above, the surface of the predetermined side is the back surface of the device body. The recessed portion extends to the bottom side surface adjacent to the back surface of the device body, and/or the recessed portion extends to a vertical side surface adjacent to the back surface of the device body.

Optionally, in the electrical device described above, the device body includes at least one battery module and at least one main control box. The battery module and the main control box are electrically connected through a hot-swappable component.

Optionally, in the electrical device described above, the main control box and the battery module are arranged vertically, with the main control box located on the top of the battery module.

The electrical device provided according to the present application includes the device body. The recessed portion is provided on the surface of the predetermined side of the device body and extends to the surface of at least one side of the device body adjacent to the predetermined side. Elements are mounted in the recessed portion and connected to interior of the device body.

When applying the aforementioned electrical device, the surface of the predetermined side is configured as the back surface of the device body, and the elements mounted in the recessed portion include at least a wiring port for connecting cables. The recessed portion extends from the back surface of the device body to the surface of at least one side of the device body adjacent to the predetermined side, facilitating wiring personnel to insert their hands and/or tools into the recessed portion from the surface of the at least one side adjacent to the predetermined side to perform wiring operations on the wiring port. This avoids performing the wiring operations from the back surface of the device body, improving the convenience of wiring, eliminating the need to reserve excessive space on the back side of the electrical device, and saving footprint of the electrical device.

Furthermore, the recessed portion is located on the surface of the predetermined side of the device body. If the surface of the predetermined side is configured as the back surface of the device body, the recessed portion is open from the back surface of the device body, facilitating the routing of wire harnesses connected to the wiring port from the back side of the device body. This ensures that the connected wire harnesses are concealed by the device body rather than hanging from the side or top surface of the device body, maintaining a neat and orderly appearance of the electrical device. Meanwhile, the recessed portion extends to the surface of at least one side adjacent to the predetermined side of the device body, allowing the recessed portion to be visible from this at least one side surface, and facilitating operations on the elements in the recessed portion.

Moreover, the elements mounted in the recessed portion may further include a button, an indicator light, etc. to save space on other surfaces of the device body.

### BRIEF DESCRIPTION OF THE DRAWINGS

For more clearly illustrating the technical solutions in the embodiments of the present application or in the conventional technology, drawings referred to describe the embodiments or the conventional technology will be briefly described hereinafter. Apparently, the drawings in the following description are related to some embodiments of the present application, and for those skilled in the art, other drawings may be obtained based on these drawings without any creative efforts.
FIG. 1 is a schematic structural view of an electrical device provided according to a first embodiment of the present application;
FIG. 2 is a schematic structural view of an electrical device provided according to a second embodiment of the present application; and
FIG. 3 is a schematic structural view of an electrical device provided according to a third embodiment of the present application.

Reference numerals in the drawings are as follows:

| | | | |
|---|---|---|---|
| 1 | device body; | 101 | top side surface; |
| 102 | back surface; | 103 | vertical side surface; |
| 104 | bottom side surface; | 11 | battery module; |
| 111 | first connector; | 12 | main control box; |
| 121 | second connector; | 2 | recessed portion; |
| 21 | bottom surface; | 22 | vertical connecting surface; |
| 23 | inclined top surface; | 3 | wiring port; |
| 4 | cover plate; | 5 | stand. |

### DETAILED DESCRIPTION OF THE EMBODIMENTS

An electrical device is disclosed in an embodiment of the present application, including a device body. A recessed portion is provided on the surface of a predetermined side of the device body, and extends to the surface of at least one side of the device body adjacent to the predetermined side. Provided the surface of the predetermined side is defined as a back surface of the device body, wiring operations can be performed by accessing to the recessed portion from a surface adjacent to the back surface. This improves the convenience of back-side wiring operations, avoids the need to reserve an excessive space on the back side of the electrical device, and saves floor space occupied by the electrical device.

Hereinafter, technical solutions in the embodiments of the present application will be described clearly and completely with reference to the drawings showing the embodiments of the present application. Apparently, the described embodiments are only some rather than all embodiments of the present application. Based on the embodiments of the present application, all other embodiments obtained by those skilled in the art without any creative work fall into the protection scope of the present application.

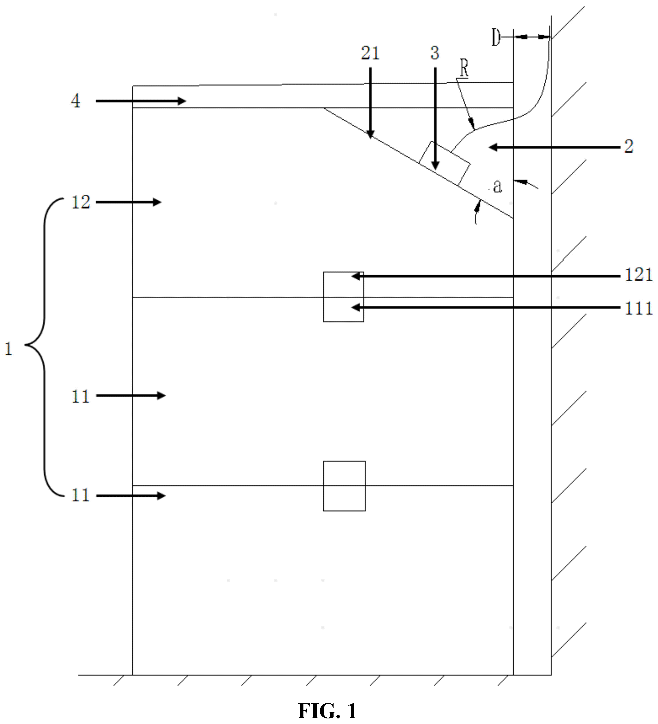

Referring to FIGS. 1 to 3, an electrical device is provided in an embodiment of the present application, including a device body 1. A recessed portion 2 is provided on a surface of a predetermined side of the device body 1, and extends to the surface of at least one side of the device body 1 adjacent to the predetermined side. Elements connected to the interior of the device body 1 are mounted in the recessed portion 2.

When applying the aforementioned electrical device, the surface of the predetermined side is configured as the back surface 102 of the device body 1, and the elements mounted in the recessed portion 2 include at least a wiring port 3 for connecting cables. The recessed portion 2 extends from the back surface of the device body 1 to the surface of at least one side of the device body 1 adjacent to the predetermined side, facilitating the wiring personnel to insert their hands and/or tools into the recessed portion 2 from the surface of the at least one side adjacent to the predetermined side to perform wiring operations on the wiring port 3. This avoids performing the wiring operations from the back surface 102 of the device body 1, improving the convenience of wiring, eliminating the need to reserve excessive space on the back side of the electrical device, and saving the floor space occupied by the electrical device.

The recessed portion 2 is located on the surface of the predetermined side of the device body 1. If the surface of the predetermined side is configured as the back surface 102 of the device body 1, the recessed portion 2 is open from the back surface 102 of the device body 1, facilitating the routing of the wire harness connected to the wiring port 3 from the back side of the device body 1. This allows the wire harness to be concealed by the device body 1 rather than hanging from the side or top surface of the device body 1, ensuring a neat appearance of the electrical device. Additionally, the recessed portion 2 extends to the surface of at least one side adjacent to the predetermined side of the device body 1, making the recessed portion 2 visible from the at least one side surface, and facilitating operations on the elements in the recessed portion 2.

Furthermore, the elements mounted in the recessed portion 2 may further include a button, an indicator light, etc. to save space on other surfaces of the device body 1.

The device body 1 has an upright cuboid structure, including multiple vertical side surfaces connected end to end, a top side surface sealing the upper ends of the vertical side surfaces, and a bottom side surface sealing the lower ends of the vertical side surfaces. One of the vertical side surfaces of the device body 1 is the back surface, which is adjacent to a wall or other electrical devices on site. Applying the electrical device provided in this embodiment can shorten a distance D between the back surface of the device body 1 and the adjacent wall or other electrical devices.

In some embodiments, the surface of the predetermined side of the device body 1 is defined as the back surface 102 of the device body 1, and the recessed portion 2 extends to the top side surface 101 of the device body 1, facilitating operations on the elements in the recessed portion 2 from above the device body 1 and facilitating the arrangement of other devices around the device body 1 on site.

It can be understood by those skilled in the art that the application site of the electrical device may be an indoor environment, or an outdoor environment where it may be exposed to rain and snow. To prevent rain and snow from entering the recessed portion 2 from above the device body 1 and from endangering the safety of the elements in the recessed portion 2, a cover plate 4 is mounted on the top side surface 101 of the device body 1 of the aforementioned electrical device, thereby covering the recessed portion 2 from above, as shown in FIG. 1.

The recessed portion 2 is covered by the cover plate 4 from above. To avoid operations on the elements from the back surface of the device body 1, the recessed portion 2 extends not only to the top side surface 101 of the device body 1 but also to one or two opposite vertical side surfaces 103 adjacent to the back surface of the device body 1. During operation, hands and/or tools may enter into the recessed portion 2 from the aforementioned vertical side surface(s) 103 to perform operations such as wiring on the elements. The cover plate 4 may be designed to be openable and closable. When operations on the elements are required, the cover plate 4 is opened to expose the recessed portion 2 from the top side surface 101 of the device body 1, facilitating entry of hands and/or tools into the recessed portion 2 from above the device body 1 to perform operations such as wiring on the elements. After the operations are completed, the cover plate 4 is closed to cover the recessed portion 2 from above, preventing rain and snow from entering the recessed portion 2 from above and from endangering the insulation and safety of the elements.

Preferably, the bottom surface 21 of the recessed portion 2 is an inclined plane, with its upper end intersecting the top side surface 101 of the device body 1 and its lower end intersecting the back surface 102 of the device body 1. The elements are mounted on the bottom surface 21 of the recessed portion 2.

Providing the bottom surface 21 as an inclined plane prevents water accumulation in the recessed portion 2, further enhancing the safety of the elements. The bottom surface 21 is at a predetermined angle from the vertical direction. This ensures rapid water drainage while improving the smoothness of wire harnesses connected to the wiring port 3 or other elements, being routed from the back surface of the device body 1. It avoids a bending radii R of the wire harnesses being too small, which could compromise their reliability. The predetermined angle may range between 0 to 45 degrees.

The bottom surface 21 of the recessed portion 2 intersects with two opposite vertical side surfaces 103 of the device body 1, both of which are adjacent to the top side surface 101 and the back surface 102.

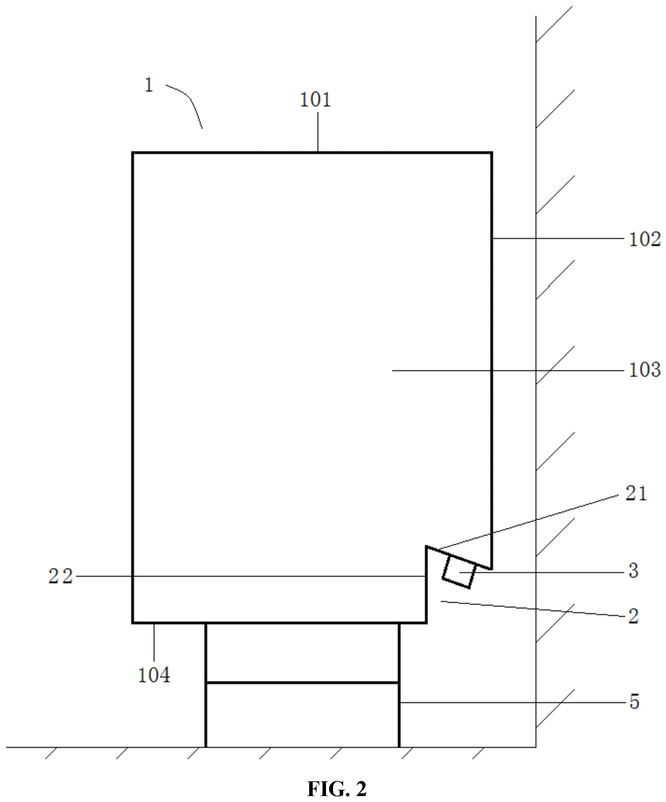

In some embodiments, the device body 1 may be suspended from a wall at the application site or fixed to the ground at the application site via a stand 5. In this case, the bottom side surface 104 of the device body 1 is elevated. The recessed portion 2 may extend to the bottom side surface 104 of the device body 1, as shown in FIG. 2. During application, hands and/or tools may enter into the recessed portion from the bottom side surface 104 to perform operations such as wiring on the elements. The recessed portion 2 may further extend to one or two opposite vertical side surfaces 103 adjacent to the back surface of the device body 1, facilitating staff to perform operations such as wiring from the vertical side surface(s) 103 or the bottom side surface 104 of the device body 1 based on the site conditions and personal operating habits.

Further, to prevent water ingress, the recessed portion 2 is designed to include an inclined top surface 23 and a vertical connecting surface 22 intersecting with each other. The inclined top surface 23 intersects with the back surface 102 of the device body 1, and the vertical connecting surface 22 intersects with the bottom side surface 104 of the device body 1. The inclined top surface 23 is higher at the end that intersects with the vertical connecting surface than at the end that intersects with the back surface 102. The elements are mounted on the inclined top surface 23.

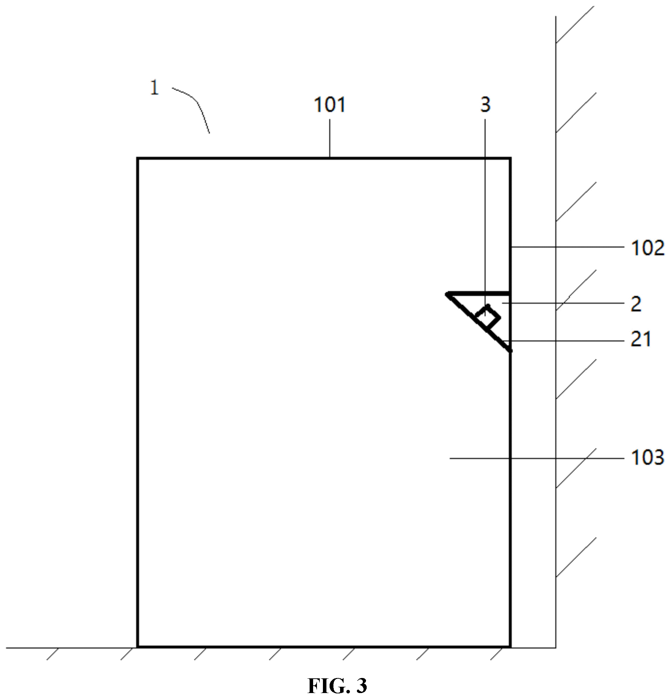

In some other embodiments, the recessed portion 2 is located in the middle of the back surface of the device body 1 in the vertical direction, and the recessed portion 2 extends to one vertical side surface 103 adjacent to the back surface of the device body 1, as shown in FIG. 3, or to two vertical side surfaces 103 that are adjacent to the back surface of the device body 1. Further, to prevent water accumulation, the recessed portion 2 is designed to include a top surface and bottom surface 21 intersecting with each other. The top surface intersects with the back surface 102 of the device body 1, and the bottom surface 21 intersects with the back surface 102 of the device body 1. The bottom surface 21 is higher at the end that intersects with the top surface than at the end that intersects with the back surface 102. The elements are mounted on the bottom surface 21.

The aforementioned electrical device may be configured as a household energy storage device. The device body 1 includes at least one battery module 11 and at least one main control box 12. The battery module 11 and the main control box 12 are electrically connected through a hot-swappable component. The hot-swappable component includes a first connector 111 fixed to the battery module 11 and a second connector 121 fixed to the main control box 12. The first connector and the second connector are plugged in and mated with each other.

The main control box 12 and the battery module 11 are arranged vertically, with the main control box 12 located on the top of the battery module 11. If multiple battery modules 11 are provided, the battery modules 11 are preferably stacked vertically, and adjacent battery modules 11 are also connected through a hot-swappable component.

The aforementioned recessed portion 2 may be located on the back surface of the main control box 12 or the back surface of any of the battery modules 11, which is not limited in the embodiments.

The embodiments in the specification are described in a progressive manner, and each embodiment focuses on the difference from other embodiments. Same and similar parts in each embodiment may be referred to each other.

The disclosed embodiments are described above so that those skilled in the art can implement or use the present application. Various modifications made to the embodiments are apparent to those skilled in the art. The general principle defined herein may be implemented in other embodiments without departing from the spirit and scope of the present application. Therefore, the present application should not be limited to the embodiments disclosed herein, but has the widest scope in accordance to the concept and the novel features disclosed herein.

## Claims

1. An electrical device, comprising a device body, wherein
a recessed portion is provided on a surface of a predetermined side of the device body, and extends to a surface of at least one side of the device body adjacent to the predetermined side; and
elements are mounted in the recessed portion and connected to interior of the device body.

2. The electrical device according to claim 1, wherein the surface of the predetermined side is a back surface of the device body; and
wherein the recessed portion extends to a top side surface of the device body.

3. The electrical device according to claim 2, wherein a cover plate is mounted on the top side surface of the device body to cover the recessed portion.

4. The electrical device according to claim 3, wherein the recessed portion further extends to one vertical side surface of the device body adjacent to the back surface, or to two opposite vertical side surfaces of the device body adjacent to the back surface; or
wherein the cover plate is openable and closable.

5. The electrical device according to any one of claims 2 to 4, wherein a bottom surface of the recessed portion is an inclined plane;
wherein the bottom surface has an upper end intersecting the top side surface of the device body and a lower end intersecting the back surface of the device body; and
wherein the elements are fixed to the bottom surface of the recessed portion.

6. The electrical device according to claim 5, wherein the bottom surface of the recessed portion intersects two opposite vertical side surfaces of the device body, which are adjacent to both the top side surface and the back surface.

7. The electrical device according to claim 5, wherein the bottom surface is at a predetermined angle to the vertical.

8. The electrical device according to claim 1, wherein the surface of the predetermined side is the back surface of the device body;
wherein the recessed portion extends to the bottom side surface of the device body adjacent to the back surface, and/or to a vertical side surface of the device body adjacent to the back surface.

9. The electrical device according to claim 1, wherein the device body comprises at least one battery module and at least one main control box, and
wherein the battery module and the main control box are electrically connected through a hot-swappable component.

10. The electrical device according to claim 9, wherein the main control box and the battery module are arranged vertically, with the main control box located on the top of the battery module.
